# EUROPEAN PATENT APPLICATION

(11) **EP 0 969 543 A2**
(43) Date of publication of application: **05.01.2000**
(21) Application number: 99202746.6
(22) Date of filing: 08.07.1992
(51) Int. Cl.: H01M 10/48, G01R 31/36

(54) **Battery with integral condition tester**

(30) Priority: 16.07.1991 US 730712
(62) Divisional of application: 92306254.1
(71) Applicant: DURACELL INC., Bethel, Connecticut 06801 (US)
(72) Inventor: Wang, Chih-Chung, Lexington, MA 02173 (US); Eisensmith, Terry Charles, Guildford, Connecticut 06437 (US); Kiernan, Charles Edmond, Westport, Connecticut 06880 (US); Milanese, Robert Louis, Brookfield, Connecticut 06804 (US)
(74) Representative: Cockbain, Julian, Dr.

(57) **Abstract**

The combination of an electrochemical cell having two external termini, a label and a covered cell condition indicator;
said cell comprising: a sealed cylindrical container an outer surface whereof provides one of said termini; a cover sealing said container; a further one of said external termini; and
means for conducting electricity from the inner side of said container to said further terminus;
said indicator being disposed externally of said sealed container and comprising a resistance heating element and a thermochromic display and said resistance heating element having two electrical contacts which in the operation of said indicator are electrically conducted to respective said termini,
   characterised in that a contact is disposed to contact one of said termini and the other contact is disposed at the other one of said external termini of said sealed cylindrical container, the first of said contacts being separated from electrical contact with a first of said termini by an apertured insulator on the side of said cell whereby in operation of said indicator said first contact may be brought into electrical contact with said first terminus by application of external pressure to cause it to pass through an aperture in said insulator and come into electrical contact with said first terminus, and whereby said electrical contact is broken by removal of said external pressure, and in that said indicator is positioned between the external surface of said label and one of said first termini;
   and further characterised in that said thermal insulator is the minimum thickness necessary to permit the cell condition indicator to function reliably, said thermal insulation being positioned between said resistance heating element and the external surface of said cylindrical container.

## Description

This invention relates to an improved combination of an electrochemical cell and an integrally related battery condition indicator.

Electrical primary cells which include a means for visually indicating the condition or state of charge of the cell are known. For example, an indicator apparatus is disclosed in U.S. Pat. No. 1,497,388 which is positioned at a location so that the current in the cell passes through the indicator. The indicator is a paper which is impregnated with a chemical that changes color depending upon the strength of the current passing through the chemical impregnated paper. Wires or electrodes must therefore be attached to opposite sides of the impregnated paper to provide a current flow through that paper. Disadvantages of this invention are that the lead wires can be easily dislodged, the indicating device can be readily tampered with, and the loose wires interfere with insertion of the cell into a device. Further, the chemical that is impregnated in the paper can be effected by environmental conditions and rendered unreliable.

In Reilly, et al., U.S. Pat. No. 2,980,754 issued April 19, 1961, a cell exhaustion indicator is disclosed consisting of a relatively thin layer of a material which changes appearance on contact with the cell electrolyte. The material is positioned between a consumable metal anodic cell container and a transparent wrapper for the cell. As the anode is consumed producing electricity, small holes are created which provide openings through which the electrolyte reaches and soaks through the insulating material to come into contact with an indicating layer. When the electrolyte makes contact with the indicating layer, a reaction takes place which leaves a white contrasting reaction product. This invention would not work for cells which do not consume the container during discharge, such as alkaline zinc/manganese dioxide cells or lithium cells.

In Eekma, U.S. Pat. No. 3,514,338 an indicator is added to the casing of a battery with the indicator substance being color changeable in the presence of water. This indicating substance is viewable through a transparent casing portion of the cell. This invention is only capable of indicating that the cell has been activated and is not capable of indicating the relative condition of the battery during usage.

In Hruden, U.S. Pat. No. 3,563,806, a battery capacity and activation indicating structure includes a piece of absorbent material impregnated with a pH sensitive dye. The material is dried and then positioned in openings in the battery can with a transparent window being provided so that the impregnated material can be viewed. As the charge of the battery is depleted, the ph of the charge producing compound changes thereby causing the impregnated material to change colors. This would not operate in a cell which does not have an appreciable pH change during discharge such as an alkaline manganese dioxide cell or a lithium cell.

In Eaton, Jr., et al., U.S. Pat. No. 3,773,563 a dye/aluminum mixture is placed in a cylindrical recess drilled in a zinc plate with the recess being sealed to cover the dye/aluminum mixture. As power is provided from the battery, the zinc electrode is dissolved until the end of the recess is eaten away and the dye liberated. The change in color of the electrolyte when the dye is released can be viewed to indicate that the life of the battery has been depleted. Disadvantages of this invention are that it is located inside the cell, which complicates assembly, and it only works with a plate-type electrode.

In Depoix, U.S. Pat. No. 3,992,228, issued November 16, 1976, the indicator consists of perforated copper or copper alloy sheet which is made visible from the outside of the cell by a suitable transparent window through the side of the cell. When assembled, the copper sheet becomes coated with a film of zinc giving the copper sheet a gray color. During cell discharge, the zinc of this film oxidizes and the original coloration of the copper sheet becomes visible. Disadvantages of this invention include the fact that the assembly is complicated and the fact that it only can indicate one condition of the battery dependent on the depth that the indicator is embedded in the electrode.

Chevet, U.S. Pat. No. 4,048,388, discloses an indicator consisting of an enclosed substance in the interior of the cell which can be viewed from outside of the battery. This substance is such that it changes color when it comes in contact with the electrolyte. The electrolyte comes in contact with the indicating substance only after the container in which the indicating substance has been placed has been consumed by the charge generating chemical reaction. Hence, the indication will occur only after the charge in the battery has been substantially depleted.

Bertolino, U.S. patent No. 4,497,881 discloses that observation of one of the active materials in the call can provide an indication of the condition of the battery provided that the active material undergoes a continuous color change throughout the normal lifetime of the battery. A disadvantage of this invention is that it only works for batteries having active materials which undergo a colour change upon discharge. Further, it is undesirable to have any elements penetrating the battery casing or cover, such as the viewing window, which can be a leakage pathway.

US-A-5015544 discloses a battery with a condition indicator and switching means for connecting the indicator across the terminals to bring it into action.

In EP-A-495,636 of Eveready Battery Company, Inc. a battery with integral tester label is disclosed where the tester forms part of the label and comprises a circuit whose ends contact or are contactable with the terminals of the battery.

According to one aspect of the present invention there is provided a combination of an electrochemical cell and a cell condition indicator, with the features set out in claim 1.

EP-A-450938, a document with a publication date between the priority date and the publication date of the present application, discloses a battery tester with a voltmeter, wherein the voltmeter comprises a dielectric layer (13), a conductive layer (14, 15, 16) positioned adjacent the dielectric layer (13), and a temperature sensitive colour indicator layer (19) in contact with the conductive layer (14, 15, 16). The conductive layer (14, 15, 16) is capable of generating sufficient heat to effect a change in the temperature sensitive control indicator layer (19). The voltmeter can be integrated with a label and attached directly to a battery. Further, documents EP-A-497617 and EP-A-495636 are of the same nature and are related likewise to battery cells with an integrated load condition indicator.

In the present invention a part of the indicator is pressed to cause it to contact a terminal directly. There is no special switch mechanism. The indicator is so designed that no part thereof is positioned where it could interfere with insertion of the battery in a device such as would be the case if wires or tabs were associated therewith for connecting terminals at one or both ends of a cell, and the addition of chemicals in order to operate is not required.

In one embodiment the condition indicator is integrally related to the cell label and the switch means is located on one of the ends of the cell. In a second embodiment the condition indicator and switch means are located between the cell top and an opposing end cap.

The features and advantages of the present invention are discussed below in reference to the drawings in which:
FIG. 1 is cut-away cross-sectional view of an electrochemical cell having a condition indicator made in accordance with the present invention;
FIG. 1a is an enlarged view of a portion of FIG 1. showing the manner in which electrical connection of one of the contacts of the condition indicator to one of the cell terminals can be made;
FIG. 1b is an enlarged view of a portion of FIG. 1 showing the manner in which electrical connection of the other contact of the condition indicator to the other cell terminal can be made;
FIG. 2 shows a side view of a cell having an integrally related condition indicator;
FIG. 3 shows a cross sectional view through the upper portion of another embodiment of an electrochemical cell having an integrally related condition indicator;
FIG. 3a is an enlarged view of a portion of FIG 3. showing the manner in which electrical connection of one of the contacts of the condition indicator to one of the cell terminals can be made;
FIG. 3b is an enlarged view of a portion of FIG. 3 showing the manner in which electrical connection of the other contact of the condition indicator to the other cell terminal can be made;
FIG. 3c is a partial view of the top of the cell shown in FIG. 3; and
FIG. 4 is a cross-sectional view through a condition indicator suitable for use in the embodiment shown in FIG. 3.

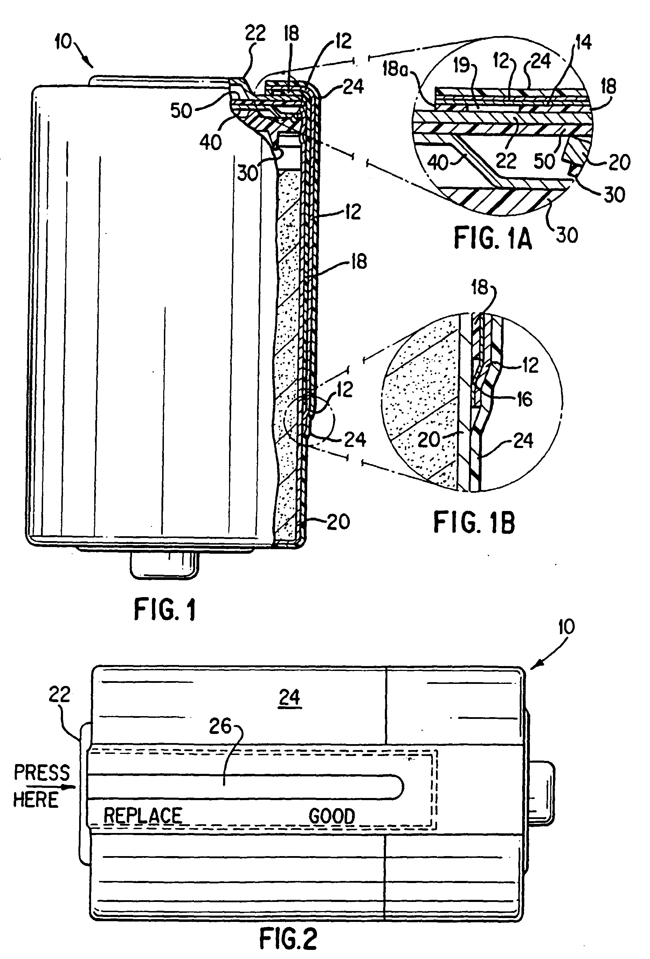

Referring now to the drawings, FIG. 1 shows a cut-away view of an alkaline electrochemical cell 10 having battery condition indicator 12 integrally associated therewith. Cell 10 comprises container 20 sealed at its open end by a cell top comprising plastic grommet 30 and metal support 40 being crimped in position as shown. Insulating washer 50 is located on top of metal support 40 and prevents contact between said support and negative end terminal 22. Negative end terminal 22 is in electrical contact with a metal anode conductor (not shown) which passes through grommet 30 and into an anode filled cavity inside the cell (not shown). Battery condition indicator 12 is located externally to the seal, along the outside of the battery container as shown.

In addition to the battery condition indicators described in the references cited above, other indicators are known, such as those disclosed in U.S. patent Nos. 4,835,476, 4,726,661, 4,835,475, 4,702,563, 4,702,564, 4,737,020, 4,006,414, 4,723,656. All of these indicators are suitable for use in the present invention. The indicators disclosed in these references generally comprise a substrate having a display means associated therewith. The display means generally comprises a conductive layer and a thermochromic material in thermal contact with the conductive layer. The conductive layer generally comprises opposite end portions which function as electrical contacts and an intermediate portion connected between the contacts which is designed to have a particular resistance. The contacts and the resistive portion can be portions of the same deposit (using silver epoxy, for example) wherein the resistive portion is created by having a lower cross sectional area than the contacts. Alternatively, the resistive portion can comprise a deposit of a more resistive material than is used for the contacts. In this latter embodiment the contacts can each comprise a metallic-like deposit that is connected to an end portion of the resistive portion, for example, the resistive portion can be made from a carbonaceous material and the contacts can be made from a silver epoxy. When the contacts are connected to the terminals of a battery a current flows through the conductive layer, which current is proportional to the voltage, and therefore, the state of discharge or condition of the battery. The heat generated in the resistive portion due to i²R heating is transferred to the thermochromic layer and causes a color change therein. Observation of the color change provides a visual indication of the condition of the battery.

Referring again to the drawings, indicator 12 is of the type described in the preceding paragraph and comprises a first electrical contact 14 at one end thereof (see FIG. 1a). Contact 14 is normally unconnected to negative terminal 22. However, connection is made to activate the condition indicator by use of a switch means, discussed more fully below. At the opposite end of indicator 12 is a second electrical contact 16 that is mechanically and electrically connected to cell container 20 by label 24 (see FIG. 1b). As described above, electrical contacts 14 and 16 are part of a conductive deposit wherein the intermediate portion of the deposit between the contacts is more resistive than the contacts. This resistive portion must be electrically insulated from container 20, otherwise indicator 12 would be continuously connected across the terminals of the cell and the cell would rapidly discharge. Figs. 1, 1A, and 1B show insulating layer 18 located between indicator 12 and container 20.

The present invention further comprises a switch means for electrically connecting and disconnecting electrical contact 14 from negative terminal 22. A switch means is provided that comprises aperture 19 provided in insulator 18 directly beneath contact 14 (see FIG. 1A). Insulator 18, described more fully below, is an electrical and thermal insulator that normally separates contact 14 from negative terminal 22. However, by pressing label 24 in the area over aperture 19 contact 14 is mechanically and electrically connected to terminal 22 as long as the pressure is maintained. After the battery condition is read from indicator 12 the pressure is released and contact 14 springs away from terminal 22 due the elastic properties of label 24 and the circuit is broken. Thus, insulating layer 18 and hole 19 function as a switch means for the condition indicator. Insulating layer 18 also serves to thermally insulate the resistive element from container 20 so that the heat generated in the resistive element during testing can be effectively transferred to the thermochromic indicating material. Insulating layer 18 can be made from any insulating material such as polyester, PVC, polyolefins, fiberglass, glass, rubber, polycarbonate, paper, cardboard, and the like formed into a sheet. Layer 18 preferably has dimensions which are sufficient to insulate the intermediate portion of the conductive deposit from the cell container. The thickness of layer 18 should be the minimum necessary to permit condition indicator 12 to function properly so that the combined thicknesses of the insulator and condition indicator are kept to a minimum.

Second electrical contact 16 is shown being held against negative terminal 22 by outer label 24 (see FIG. 1a). Outer label 24 can be either a shrink-wrap type, an adhesive-backed wrap-around type or any other type which is conventionally used as a label. In one embodiment the graphics of the condition scale (see, for example, Fig. 2) are printed on the substrate of indicating means 12 so that the portion of label 24 which covers indicator 12 should be clear in order to reveal the scale. Alternatively, the condition scale can be printed on the label and the label positioned so as to align the scale with the underlying position of indicating means 12. Yet another embodiment is possible when label 24 is a wrap-around type. With indicator 12 fixed in position on the outer container wall one edge of the wrap-around label is butted against one edge of the indicator and the other label edge, after wrapping around the container, is butted against the other edge of indicator 12. In this latter embodiment indicator 12 and insulating layer 18 would have to be held to cell container 20 by an appropriate adhesive. In any of the above described embodiments wherein the label covers indicating means 12 it is preferred that the portion of the label which covers the thermochromic material is either cut away or is raised outwardly so that the label can not act as a heat sink and retard the color change of the thermochromic material.

In yet another embodiment, indicator 12 is an integral part of the label wherein the label functions as a substrate for the thermochromic material and the resistive element. In this embodiment the electrical contacts and the resistive element are printed or otherwise deposited on the inside surface of the label. The thermochromic layer can be located in a number of places depending on convenience and the type of label used. In one embodiment the thermochromic material is placed on the outer portion of the label that is in thermal contact with the resistive element. In a second embodiment the thermochromic layer and the contacts and resistive element are applied as successive layers to the inside of a clear portion of the label. For example, the thermochromic layer is applied first to a clear portion of the label's inside surface. Over this layer a color graphics layer, which is revealed when the thermochromic layer turns clear, is applied. Next in the layering sequence is the metallic deposit with the resistive portion coincident with the thermochromic layer and the contacts positioned on opposite ends of and connected to the resistive portion. In any of the above embodiments an insulating layer is located over those portions of the metallic deposit desired to be kept insulated from container 20. A switch means is made an integral part of the label by providing a hole, similar to hole 19, in the insulating layer and positioned over one of the contacts so that the contact can be pressed against one of the terminals as described above. The label, with integrally related condition indicator, is applied to the cell container using any conventional manner.

The substrate used for the condition indicator is preferably made from a material having elastic-type properties. Thus, the substrate is slightly stretched when pressure is applied over hole 19 to make the measurement and when the pressure is released the substrate returns to its original position and breaks the contact. To ensure that the substrate is rigidly held during the measurement it is preferred that portion 18a of the insulating layer has adhesive on both sides so that the adjacent end of indicator 12 is firmly held in place and prevented from sliding towards opening 19 when pressure is applied during the measurement. Non-limiting examples of substrate material include thermoplastics such as polyolefins, polyhalohydrocarbons, and rubber.

FIG. 2 shows a side view of cell 10 and integrally related condition indicator 12 as described above. In the embodiment shown label 24 is imprinted with a condition scale 26 that is superimposed over condition indicator 12 (shown in ghost outline in FIG. 2) that is fixed to the side of the cell as shown in FIG. 1. Pressure is applied to the end of the cell (not shown) over aperture 19 using a finger, pencil eraser, or any other blunt implement. While pressure is maintained a color change appears over condition scale 26. The extent to which the color change appears along scale 26 provides a measurement of the battery condition. Once the applied pressure is released the measurement stops and the thermochromic layer returns to its original color.

In the embodiments discussed thus far the disconnected contact of the condition indicator is connected to the opposing cell terminal by an integrally related switch means. This is facilitated in the described embodiments having the contact facing the cell terminal. It is also within the scope of the present invention to have the disconnected contact exposed on an external surface of the battery and facing outwardly from the cell terminal. For example, a hole located in the label and condition indicator substrate (if there is one) coincident with the contact would expose said contact (see FIG. 1B). Other embodiments are also possible that would expose the disconnected contact. (In any of these embodiments there would not be a hole 19 in insulating layer 18, rather the insulating layer would extend substantially behind said contact.) Connection of said exposed contact to the cell terminal is achieved by holding a discrete conductive element such as a wire, tab, paper clip or the like so that it touches both the contact and the terminal. When the cell condition is not being tested the exposed contact is covered with a piece of adhesive film so that accidental connection can not take place. This embodiment may be preferred for batteries that are intended for use in devices where motion of the device can cause pressure to be applied to the side of the battery.

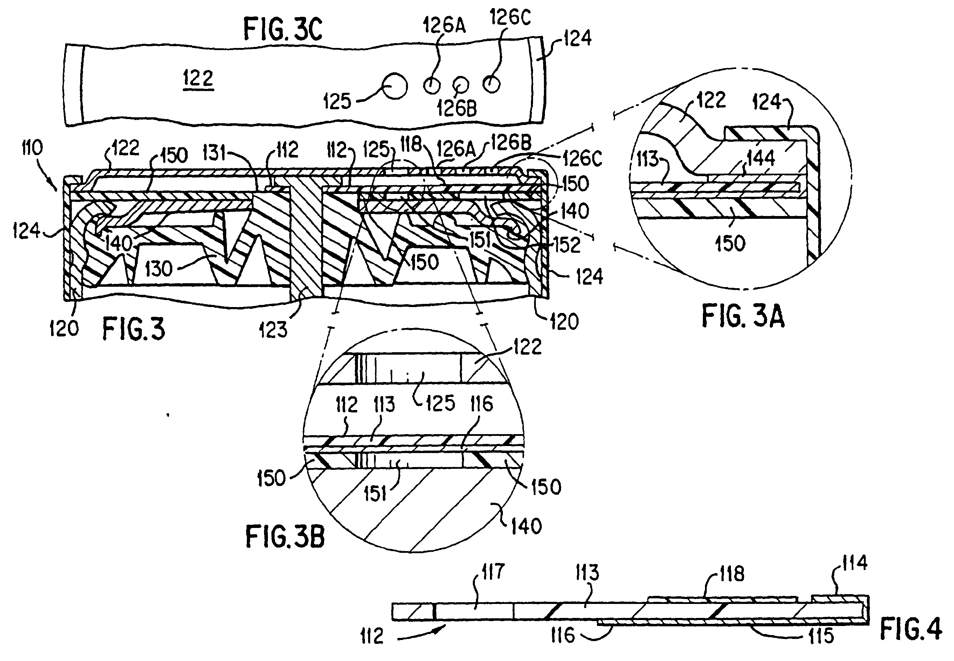

A further embodiment of the present invention will now be discussed in reference to Figs. 3, 3a, 3b, 3c, and 4. Fig. 3 shows a cross sectional view through the upper portion of electrochemical cell 110. Cell 110 comprises container 120 sealed at its open end by a cell top comprising plastic grommet 130 and metal support 140 crimped in place as shown. Insulating washer 150 rests on metal support 140. This embodiment differs from the previously described embodiment in that container 120 is crimped inwardly and contacts metal support 140 so that metal support 140 is electrically connected to said container. Insulating washer 150 has a centrally located aperture which fits closely over centrally located boss 131 on grommet 130. Additionally, washer 150 has apertures 151 and 152 which are described more fully below. Washer 150 can be made of any electrically insulating material such as polyester, PVC, polyolefins, fiberglass, glass, rubber, polycarbonate, paper, cardboard, and the like.

Battery condition indicator 112 is positioned over washer 150 as shown. Indicator 112 operates on the same principle as the indicator described in connection with Figs. 1-2. As shown in FIG. 4, indicator 112 comprises substrate 113, a first electrical contact 114, a second electrical contact 116, and a resistive portion 115 connected between contacts 114 and 116. A display means is connected between said contacts and comprises thermochromic layer 118 in thermal contact with resistive portion 115. Substrate 113 has aperture 117 located at one end so that anode conductor 123 passes through said aperture and holds condition indicator 112 against grommet 130. With indicator 112 held in this position, electrical contact 116 is positioned over aperture 151 in washer 150. The opposite end of indicator 112 is tightly held between end terminal 122 and washer 150 by label 124. Electrical contact 114 is in mechanical and electrical contact with end terminal 122 as shown in Fig. 3a.

End terminal 122 is provided with activating aperture 125 and indicating apertures 126a, 126b, and 126c. Activating aperture 125 is located over the portion of condition indicator 112 that is superimposed over aperture 151 in washer 150. Thus, when an implement such as a pencil point is inserted through activating aperture 125 and pressed against condition indicator 112 electrical contact is made between contact 116 and metal support 140. Metal support 140 is electrically connected to container 120 as shown, and container 120 is in physical and electrical contact with the positive electrode. Thus, connection of contact 116 to metal support 140 completes the circuit and current flows through condition indicator 112. Resistive element 115 generates resistive heat and that heat is transferred to thermochromic layer 118. By observing thermochromic layer 118 through indicating apertures 126a, 126b, and 126c the condition of the battery is indicated. Resistive element 115 is designed to generate heat so that when the battery is in a full state of charge a color indication is observed in thermochromic layer 118 through all three apertures. At some intermediate state of charge a color change is observed in only two of the apertures, and near the end of the useful life of the battery a color change is observed in only one aperture.

Alternatively, one indicating aperture can be located over the display means when successive layers of thermochromic materials are used. For example three different thermochromic materials having different transition temperatures are layered with the material having the lowest transition temperature on top and the material having the highest transition temperature on the bottom. With each layer having a different "cold color" the observed color depends on how hot the resistive element becomes which in turn depends on the condition of the battery.

In order to enhance the color change of thermochromic layer 118 it is desirable to include aperture 152 in washer 150. As shown in FIG. 3 aperture 152 is located beneath the portion of indicator 112 which bears thermochromic layer 118. Thus, an air layer is provided under indicator 112, which air layer acts as a thermal insulator. However, aperture 152 can be omitted if the material used for washer 150 is itself a reasonable thermal insulator.

The specific design of the condition indicator will depend, of course, on the size and voltage of the associated battery. The patents incorporated herein by reference contain disclosure sufficient for one skilled in the art to design and construct a condition indicator suitable for use in the present invention. The thermochromic materials disclosed in said patents include liquid crystals and thermochromic inks. Of these, thermochromic inks are preferred because more dramatic color effects are possible than when liquid crystals are used.

The specific embodiments described above and shown in the drawings are preferred embodiments.

## Claims

1. The combination of an electrochemical cell (10) having two external termini (20,22), a label (24) and a covered cell condition indicator (12);
said cell comprising: a sealed cylindrical container (20) an outer surface whereof provides one of said termini (20); a cover (30,40) sealing said container; a further one of said external termini (22); and means (123) for conducting electricity from the inner side of said container to said further terminus;
said indicator being disposed externally of said sealed container and comprising a resistance heating element and a thermochromic display (26) and said resistance heating element having two electrical contacts (14,16) which in the operation of said indicator are electrically conducted to respective said termini,
characterised in that a contact (14 or 16) is disposed to contact one of said termini (20 or 22) and the other contact (16 or 14) is disposed at the other one of said external termini (22 or 20) of said sealed cylindrical container, the first of said contacts being separated from electrical contact with a first of said termini (20) by an apertured insulator (18) on the side of said cell (10) whereby in operation of said indicator said first contact may be brought into electrical contact with said first terminus by application of external pressure to cause it to pass through an aperture (19) in said insulator and come into electrical contact with said first terminus, and whereby said electrical contact is broken by removal of said external pressure, and in that said indicator is positioned between the external surface of said label (24) and one of said first termini;
and further characterised in that said thermal insulator (18) is the minimum thickness necessary to permit the cell condition indicator to function reliably, said thermal insulation being positioned between said resistance heating element and the external surface of said cylindrical container.

2. The combination of claim 1 wherein every part of the cell condition indicator (12) substantially conforms to the shape of that portion of the outer surface of the cell at which said indicator is located.

3. The combination of claim 1 or 2 wherein said display (26) is positioned on the inner surface of the label (24) and wherein a transparent portion of said label covers said display.

4. The combination of claim 1, 2 or 3 wherein said display (26) comprises at least one resistive element, between said contacts (14) and (16), and a thermochromic material (12) in thermal contact with said element.

5. The combination of claim 4 wherein said resistive element is located on a portion of the inside surface of the label (24), and the thermochromic material is positioned on the other side of the label coincident with the position of the resistive element.

6. The combination of claim 4, wherein said cell condition indicator (12) is at least partially positioned on a portion of the label that extends along a portion of the container outer wall and along a portion of the second terminal, and further comprising insulating means (18) located between said container (20) and said resistive element.

7. The combination of claim 1, wherein said condition indicator display means (12) comprises at least one resistive element and a thermochromic material (12) in a thermal contact therewith, wherein said thermochromic material comprises a thermochromic ink layer located between the inside surface of said label (24) and said resistive element between (14) and (16).

8. The combination of any preceding claim, wherein said second terminal comprises a circular metal end cap (22) positioned over the cell cover (30,40) and said second electrical contact means is permanently connected to said end cap.

9. The combination of any preceding claim, wherein said label (24) holds said second electrical contact means (16) in mechanical and electrical contact with said second terminal (20).
